# EUROPÄISCHE PATENTANMELDUNG

(11) **EP 0 709 226 A1**
(43) Veröffentlichungstag der Anmeldung: **01.05.1996**
(21) Anmeldenummer: 95810592.6
(22) Anmeldetag: 21.09.1995
(51) Int. Cl.: B41M 5/30, C09B 11/24, D21H 19/42, D21H 19/46

(54) **Streichformulierungen für Thermopapiere**

(30) Priorität: 30.09.1994 CH 2965/94
(71) Anmelder: CIBA-GEIGY AG, CH-4002 Basel (CH)
(72) Erfinder: Mischler, Werner, CH-4115 Mariastein (CH); Huber, Klaus, Dr., D-79110 Freiburg (DE)

(57) **Zusammenfassung**

Es werden Streichformulierungen für Thermopapiere beschrieben, enthaltend
(a) einen Farbbildner oder ein Farbbildnergemisch, wobei als Farbbildner(n) Fluoran-, Phthalid- und Benzoxazin-Verbindungen genannt sind,
(b) eine Mischung aus
   (b₁) eines hochdispersen, festen, wasserunlöslichen organischen Polymers und
   (b₂) 0,01 bis 10 Gew.%, bezogen auf das Gewicht des wasserunlöslichen Polymers, eines wasserlöslichen optischen Aufhellers;
(c) einen Koreaktanten; und gegebenenfalls
(d) einen Aktivator.

Mit den erfindungsgemässen Streichformulierungen lassen sich thermoreaktive Papiere herstellen, die sich durch eine hervorragende Hintergrundweisse auszeichnen.

Die Erfindung betrifft auch Verbindungen der Formel 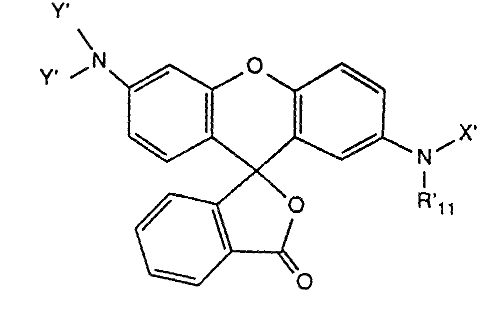 worin
- X': C₁-C₅-Alkyl; oder 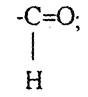
- Y': C₄-C₅-Alkyl; und
- R'₁₁: Wasserstoff oder C₁-C₅-Alkyl
bedeuten.

## Beschreibung

Die vorliegende Erfindung betrifft Streichformulierungen für wärmeempfindliche (thermoreaktive) Aufzeichnungssysteme, die mit den erfindungsgemässen Formulierungen beschichteten Thermopapiere, neue Farbbildner sowie die Herstellung dieser neuen Farbbildner.

Thermoreaktive Aufzeichnungssysteme umfassen z.B. wärmeempfindliche Aufzeichnungs- und Kopiermaterialien und -papiere. Diese Systeme werden beispielsweise zum Aufzeichnen von Informationen, z.B. in elektronischen Rechnern, Facsimilegeräten, Fernschreibern oder in Aufzeichnungsgeräten und Messinstrumenten, wie z.B. Elektrocardiographen, verwendet. Als Hauptanwendungsgebiet kann zweifellos der Facsimilebereich und das Bedrucken von Etiketten gelten, wo die Forderung nach kontrastreichen Aufzeichnungen besteht. Dieser Forderung kann einerseits durch die Verwendung von Farbbildnerkomponenten entsprochen werden, die eine intensive Farbe entwickeln bei gleichzeitig geringer Hintergrundsverfärbung, oder z.B. auch durch einen hohen Weissgrad des Papierhintergrunds.

Überraschenderweise wurde nun gefunden, dass der Weissgrad des Papierhintergrunds durch die Verwendung eines hochdispersen, festen, wasserunlöslichen organischen Polymers, insbesondere eines Harnstoff-Formaldehyd-Harzes, in Kombination mit einem wasserlöslichen optischen Aufheller erhöht werden kann.

Gegenstand der vorliegenden Erfindung ist daher eine Streichformulierung für thermoreaktive Aufzeichnungssysteme, enthaltend
(a) als Farbbildner
   (a₁) eine Fluoranverbindung der Formel 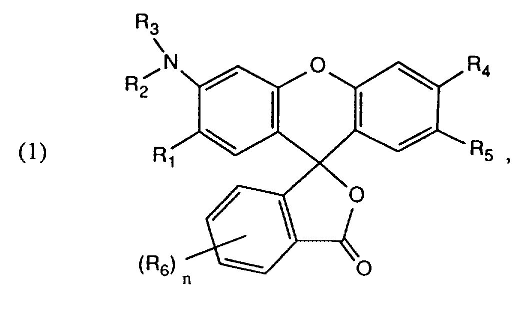 und/oder
   (a₂) eine Phthalidverbindung der Formel 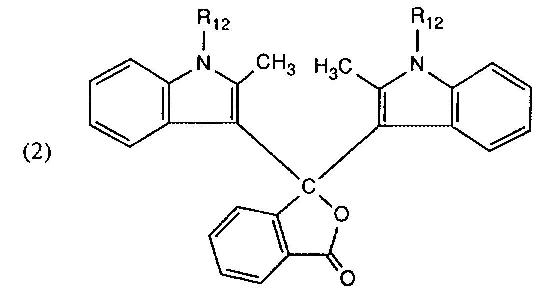 und/oder
   (a₃) eine Verbindung der Formel 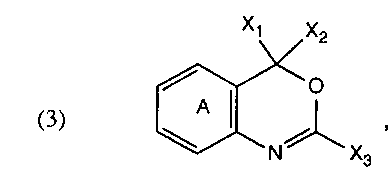 und/oder
   (a₄) eine Fluoranverbindung der Formel 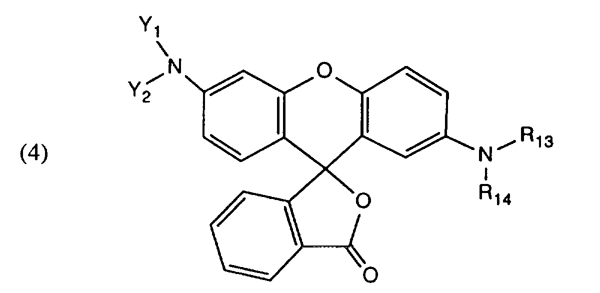
   worin
   - R₁: Wasserstoff oder C₁-C₄-Alkyl;
   - R₂ und R₃,: unabhängig voneinander, Wasserstoff; C₁-C₈-Alkyl; nicht substituiertes oder durch C₁-C₄-Alkyl oder Halogen substituiertes C₄-C₇-Cycloalkyl; nicht substituiertes oder durch C₁-C₄-Alkyl, Hydroxy oder Halogen substituiertes Phenyl; Phenyl-C₁-C₄-Alkyl; C₃-C₆-Alkenyl; C₁-C₄-Alkoxy; C₁-C₄-Alkoxy-C₁-C₄Alkyl; 2-Tetrahydrofuranyl, oder
   - R₂ und R₃: gemeinsam mit dem Stickstoffatom, an welches sie gebunden sind, einen unsubstituierten oder durch C₁-C₄-Alkyl substituierten Pyrrolidin-, Piperidin-, Morpholin-, Thiomorpholin- oder Piperazin-Ring;
   - R₄: Wasserstoff, Hydroxy; C₁-C₄-Alkyl; Amino; mono-C₁-C₄-Alkylamino; oder di-C₁-C₄-Alkylamino;
   - R₅: Nitro; SO₂R₇; SO₂OR₈; SO₂NR₉R₁₀; COR₁₁; CONR₉R₁₀; C₁-C₄-Halogenalkyl; nicht substituierter oder durch Halogen, C₁-C₄-Alkyl, C₁-C₄-Halogenalkyl oder C₁-C₄-Alkoxy substituiertes C₆-C₁₀-Aryl; unsubstituiertes oder im Phenylrest durch C₁-C₄-Alkyl, C₁-C₄-Halogenalkyl oder C₁-C₄-Alkoxy substituiertes Phenyl; Phenylamino; oder Phenyl-C₁-C₄-Alkylamino; nicht substituierter oder durch Halogen oder Hydroxy substituierter 2-Triazinyl- oder 1-Benztriazolylrest;
   - R₆: Halogen; Nitro; C₁-C₄-Alkyl; C₁-C₄-Halogenalkyl; Amino; mono-C₁-C₄-Alkylamino; di-C₁-C₄-Alkylamino; oder COR₁₁;
   - n: 0; 1; 2; 3; oder 4;
   - R₇: C₁-C₈-Alkyl; oder C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl oder Phenyl-C₁-C₄-Alkyl;
   - R₈: Wasserstoff; C₁-C₈-Alkyl; C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl oder Phenyl-C₁-C₄-alkyl;
   - R₉ und R₁₀: unabhängig voneinander Wasserstoff; oder C₁-C₈-Alkyl; oder
   - R₉ und R₁₀: gemeinsam mit dem Stickstoffatom, an welches sie gebunden sind, einen unsubstituierten oder durch C₁-C₄-Alkyl substituierten Pyrrolidin-, Piperidin-, Morpholin-, Thiomorpholin- oder Piperazin-Ring; und
   - R₁₁: Wasserstoff; Hydroxy; C₁-C₈-Alkyl; C₁-C₈-Alkoxy; C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₄-Alkyl oder Phenyl-C₁-C₄-Alkoxy;
   - R₁₂ und R₁₃,: unabhängig voneinander C₁-C₈-Alkyl oder 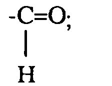
   - R₁₄: Wasserstoff oder C₁-C₅-Alkyl;
   - X₁ und X₂,: unabhängig voneinander, unsubstituiertes oder im Phenylrest durch Halogen, Nitro, C₁-C₄-Alkyl, C₁-C₄-Alkoxy, C₁-C₄-Halogenalkyl oder -NR₁₂R₁₃ substituiertes Phenyl oder Phenyl-C₁-C₄-Alkyl; einen 2-Pyrrolyl-, 2-Thienyl-, 2- oder 3-Indolyl-, 2-Benzofuranyl- oder 2-Naphthothienylrest;
   - X₃: Wasserstoff; C₁-C₅-Alkyl; C₅-C₇-Cycloalkyl, unsubstituiertes oder im Phenylrest durch Halogen, C₁-C₄-Alkyl, C₁-C₄-Halogenalkyl oder C₁-C₄-Alkoxy substituiertes Phenyl;
   - Y₁ und Y₂,: unabhängig voneinander, C₁-C₅-Alkyl;

   der Benzolring A durch Halogen; Cyano; Nitro; C₁-C₅-Alkyl; C₁-C₅-Alkoxy; C₁-C₅-Alkylthio; C₁-C₅-Alkylcarbonyl; C₁-C₅-Alkoxycarbonyl; oder NR₂R₃ substituiert sein kann; bedeutet,
(b) eine Mischung aus
   (b₁) eines hochdispersen, festen, wasserunlöslichen organischen Polymers und
   (b₂) 0,01 bis 10 Gew.%, bezogen auf das Gewicht des wasserunlöslichen Polymers, eines wasserlöslichen optischen Aufhellers;
(c) einen Koreaktanten; und gegebenenfalls
(d) einen Aktivator.

In der Literatur werden die einzelnen Substituentenposititionen im Fluoranring unterschiedlich numeriert. In der vorliegenden Anmeldung wird die folgende Numerierung verwendet: 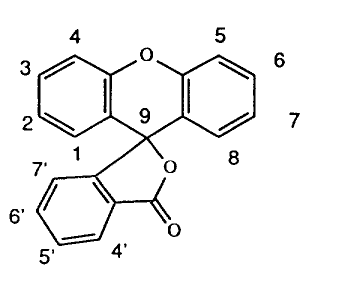 Im Rahmen der vorstehenden Definition haben die jeweiligen Substituenten insbesondere die folgenden Bedeutungen:

Halogen ist Fluor, Chlor oder Brom, insbesondere Fluor oder Chlor.

Alkyl bedeutet im Rahmen der jeweiligen Definition geradkettiges oder verzweigtes Alkyl. Beispiele solcher Alkylreste sind Methyl, Ethyl, n-Propyl, Isopropyl, n-Butyl, 1-Methylbutyl, sek.Butyl, tert.Butyl, n-Pentyl, Amyl, Isoamyl, n-Hexyl, 2-Ethyl-hexyl, n-Heptyl, n-Octyl, Isooctyl, 1,1,3,3-Tetramethylbutyl.

Beispiele für Halogenalkyl sind insbesondere die C₁-C₂-Halogenalkylreste, wie Trichlormethyl, Trifluormethyl, Dichlorfluormethyl, Difluorchlormethyl, Perchlorethyl, 1,1,,2,2-Tetrachlorethyl, 1,1,2,2-Tetrafluorethyl, 2,2,2-Trichlorethyl.

R₅ als C₁-C₈-Halogenalkyl sind insbesondere die zuvor genannten Halogenalkyle, aber auch Alkylradikale, bei denen alle oder zumindest der überwiegende Teil der C-H Bindungen durch C-Cl oder C-F ersetzt sind.

Alkoxy ist insbesondere Methoxy, Ethoxy, n-Propoxy, Isopropoxy, n-Butoxy, Isobutoxy, sek.Butoxy und tert.Butoxy, C₁-C₄Alkoxy-C₁-C₄Alkyl insbesondere Methoxymethyl, Methoxyethyl, Ethoxymethyl oder Ethoxyethyl.

Mono-C₁-C₅-Alkylamino ist insbesondere Methylamino, Ethylamino, Propylamino, Butylamino und Pentylamino. Di-C₁-C₅-Alkylamino umfaßt sowohl die gemischten wie auch die gleichnamig substituierten Radikale, wie Methylethylamino, Dimethylamino, Di-ethylamino, Methylpropylamino, Methylbutylamino, Di-n-propylamino, Di-isopropylamino, Di-n-butylamino und Di-n-pentylamino etc..

In Phenyl-C₁-C₄-Alkyl und Phenyl-C₁-C₄-Alkoxy kann der Phenylrest über eine geradkettige oder verzweigte Alkyl- bzw. Alkoxykette gebunden sein. Bevorzugt ist Phenethyl, Benzyl und Phenylmethoxy.

Der Phenylrest in Phenyl-C₁-C₄-Alkyl, Phenyl-C₁-C₄-Alkoxy bzw. Phenyl ist vorzugsweise unsubstituiert oder bis zu dreifach gleich oder verschieden durch die genannten Substituenten substituiert.

Beispiele für C₃-C₅-Alkenyl sind Allyl, 1-Propenyl oder 2-Pentenyl, Isopropenyl oder 2-Butenyl. Allyl ist bevorzugt. C₄-C₇-Cyclohexyl bedeutet Cyclobutyl, Cyclopentyl, Cyclohexyl oder Cycloheptyl, wobei Cyclohexyl im Vordergrund des Interesses steht.

Im Vordergrund des Interesses stehen Streichformulierungen, die als Komponente (a₁) eine Fluoranverbindung der Formel (1) enthalten, worin
- R₁: Wasserstoff oder Methyl;
- R₂ und R₃: unabhängig voneinander Wasserstoff; C₁-C₅-Alkyl; oder
- R₂ und R₃: gemeinsam mit dem Stickstoffatom, an welches sie gebunden sind, einen unsubstituierten Pyrrolidin- oder Piperidin-Ring;
- R₄: Wasserstoff, Hydroxy; C₁-C₄-Alkyl; Amino; mono-C₁-C₄-Alkylamino; oder di-C₁-C₄-Alkylamino;
- R₅: Nitro; SO₂R₇; SO₂NR₉R₁₀; COR₁₁; CONR₉R₁₀; C₁-C₄-Halogenalkyl; unsubstituiertes oder im Phenylrest durch Halogen, C₁-C₄-Alkyl; C₁-C₄-Halogenalkyl oder C₁-C₄-Alkoxy substituiertes Phenyl; Phenyl-C₁-C₄-Alkyl; Phenylamino; oder Phenyl-C₁-C₄-Alkylamino;
- n: 0; 1; 2; 3; oder 4;
- R₆: wenn n 1, 2, 3 oder 4 ist; Halogen; wenn n 1 oder 2 ist Methyl; oder wenn n 1 ist, Nitro, Amino, mono-C₁-C₄-Alkylamino oder di-C₁-C₄-Alkylamino;
- R₇: C₁-C₄-Alkyl; oder C₁-C₄-Halogenalkyl; unsubstituiertes oder im Phenylrest durch Halogen, C₁-C₄-Alkyl oder C₁-C₄-Alkoxy substituiertes Phenyl;
- R₉ und R₁₀: unabhängig voneinander Wasserstoff; oder C₁-C₄-Alkyl;
- R₁₁: Wasserstoff; C₁-C₄-Alkyl; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
bedeuten.

Besonders bevorzugte Farbbildner der Komponente (a₁) sind Fluoranverbindungen der Formel (1), worin
- R₅: COR₁₁ und
- R₁₁: Wasserstoff; C₁-C₄-Alkyl; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
oder Verbindungen der Formel (1), worin
- R₅: Phenyl; Phenylamino; oder Phenyl-C₁-C₄-Alkylamino bedeuten.

Bevorzugte Farbbildner der Komponente (a₂) sind solche Verbindungen, bei denen R₁₂ in Formel (2) C₁-C₈-Alkyl bedeutet.

Bei den Verbindungen der Komponente (a₃) stehen solche Fluoranverbindungen der Formel (3) im Vordergrund, bei denen
- X₁ und X₂,: unabhängig voneinander, unsubstituiertes oder im Phenylrest durch Halogen, Nitro, C₁-C₄-Alkyl, C₁-C₄-Alkoxy, C₁-C₄-Halogenalkyl oder -NR₉R₁₀ substituiertes Phenyl;
- X₃: unsubstituiertes oder im Phenylrest durch Halogen, C₁-C₄-Alkyl, C₁-C₄-Halogenalkyl, C₁-C₄-Alkoxy substituiertes Phenyl; und
der Benzolring A durch Halogen; C₁-C₅-Alkyl; C₁-C₅-Alkoxy; oder NR₉R₁₀ substituiert ist.

Bevorzugte Farbbildner der Komponente (a₄) sind solche Verbindungen der Formel (4), worin
- Y₁ und Y₂: unabhängig voneinander C₃-C₅-Alkyl und
- R₁₃: C₁-C₅-Alkyl oder 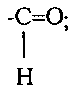 und
- R₁₄: Wasserstoff oder C₁-C₅-Alkyl;
bedeuten, und insbesondere solche, bei denen
- Y₁ und Y₂,: unabhängig voneinander, C₄-C₅-Alkyl bedeuten.

Ganz besonders bevorzugt sind Verbindungen der Formel (4), bei denen Y₁ und Y₂ die gleiche Bedeutung haben.

Bevorzugte Streichformulierungen enthalten als Komponente (a) einen Farbbildner (a₁) der Formel (1), worin
- R₁: Wasserstoff oder Methyl;
- R₄: Wasserstoff, Halogen oder Methyl;
- R₅: COR₈;
- n: 0, 1, 2, 3 oder 4;
- R₆: wenn n 1,2,3 oder 4 ist, Halogen; wenn n 1 oder 2 ist, Methyl; oder wenn n 1 ist, Nitro, Amino, mono-C₁-C₄-Alkylamino oder di-C₁-C₄-Alkylamino;
- R₈: Wasserstoff; C₁-C₄-Alky-; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
- R₂ und R₃: unabhängig voneinander Wasserstoff; C₁-C₅-Alkyl; oder
- R₂ und R₃: gemeinsam mit dem Stickstoffatom, an welches sie gebunden sind, einen unsubstituierten Pyrrolidin- oder Piperidin-Ring;
als Komponente (a₂) eine Verbindung der Formel (2), worin
- R₁₂: C₁-C₅-Alkyl bedeuten,
und als Komponente (a₄) eine Verbindung der Formel (4), worin
- Y₁ und Y₂: C₃-C₅-Alkyl und
- R₁₃: C₁-C₅-Alkyl; oder 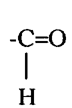 und
- R₁₄: Wasserstoff oder C₁-C₅-Alkyl;
bedeuten.

Weiterhin sind Streichformulierungen bevorzugt, die lediglich die Komponente (a₁), oder solche, die ein Gemisch aus den Komponenten (a₁) und (a₄) enthalten.

Wird als Komponente (a) ein Gemisch aus Farbbildnern verwendet, so kann dieses durch einfaches Mischen und Mahlen der genannten Komponenten (a₁) bis (a₄) hergestellt werden, wobei homogene Pulvergemische erhalten werden, die bei Raumtemperatur lagerstabil sind. Vorzugsweise werden die einzelnen Farbbildnerkomponenten zunächst einzeln in nassem Zustand gemahlen und anschliessend als Dispersion gemischt.

Die Verbindungen der Formel (1) sind aus der EP-A-0,561,738 bekannt und können nach den dort beschriebenen Methoden hergestellt werden.

Die Verbindungen der Formel (3) sowie deren Herstellung sind aus der US-A-4,675,497 bekannt.

Die Verbindungen der Formel (4) sind zum Teil bekannte Verbindungen, wie z.B. aus der US-A-5,071,480. Zum Teil fallen auch neue Verbindungen darunter. Diese neuen Verbindungen stellen einen weiteren Erfindungsgegenstand dar.

Sie entsprechen der Formel 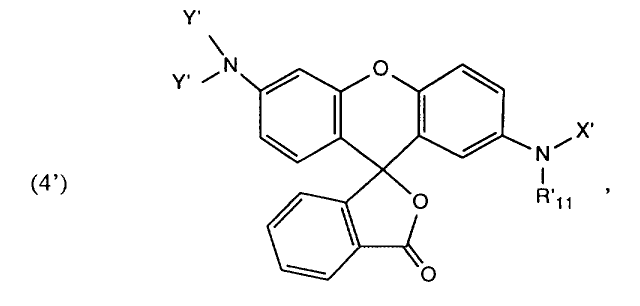 worin
- X': C₁-C₅-Alkyl; oder 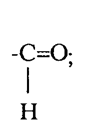
- Y': C₄-C₅-Alkyl; und
- R'₁₁: Wasserstoff oder C₁-C₅-Alkyl;
bedeuten.

Die Verbindungen der Formel (4') können nach an sich bekannten Verfahren hergestellt werden, z.B. dadurch, dass man ein Benzophenon der Formel 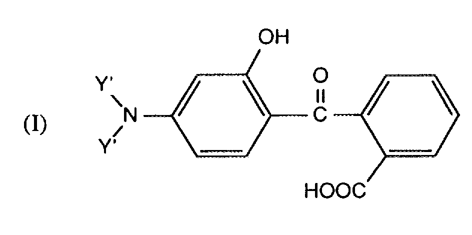 mit einem Phenol oder Phenolether der Formel 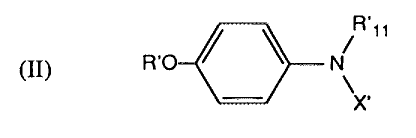 bei Temperaturen von vorzugsweise 0 bis 70° C in 50 bis 100 %iger Schwefelsäure zu einem Phthalid der Formel 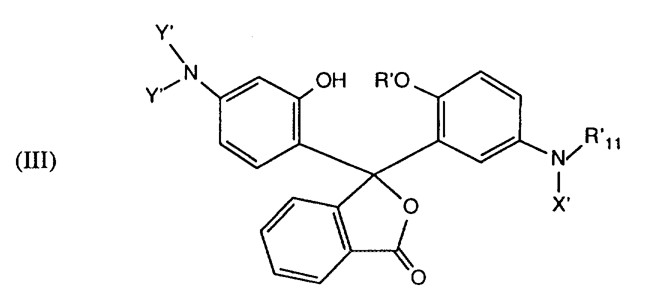 kondensiert und anschliessend bei Temperaturen von 20 bis 100° C zu einer Verbindung der Formel (4') cyclisiert. X', Y' und R'₁₁ haben dabei die in Formel (4') angegebene Bedeutung. R' bedeutet Wasserstoff oder C₁-C₄-Alkyl.

Der als Komponente (b₁) verwendete Füllstoff ist vorzugsweise ein wasserunlösliches Harnstoff-Formaldehydharz mit einem Molverhältnis von Harnstoff zu Formaldehyd von 1:1,3 bis 2 Mol. Er zeichnet sich ferner durch einen kleinen Teilchendurchmesser von 2 bis 10 µ und eine geringe spezifische BET-Oberfläche von 15 bis 60 m/g aus. Letztere ist von Bedeutung für die Vermeidung von Hintergrundverfärbungen auf den thermoreaktiven Papieren, die durch eine unerwünschte Farbreaktion des Farbbildners mit einem zu reaktiven Koreaktant zustande kommen kann. Die Komponente (b₁) kann z.B. eine hochdisperse, feste Polymerverbindung, gebildet durch Polymerisation, Polykondensation oder Polyadditionsreaktionen oder eine Kombination solcher Reaktionen sein. Solche Polymerverbindungen sind in der GB-A-1,323,890 beschrieben und schliessen Polykondensationsprodukte, insbesondere polykondensierte Aminoplaste, wie z.B. Harnstoff/Formaldehyd- und Melamin/Formaldehyd-Polymerverbindungen sowie Vinylpolymere, wie z.B. Polyacrylonitril mit ein.

Die spezifische BET-Oberfläche der bevorzugten wasserunlöslichen Harnstoff-Formaldehydharze wird nach der Methode von Brunauer, Emmett and Teller [c.f. J.Am.Chem.Soc. 60, 309-319 (1938), Chemie-Ing.Techn. 32, 349-354 (1960) and 35, 568-589 (1963)] bestimmt.

Die bevorzugten wasserunlöslichen Harnstoff-Formaldehydharze entsprechend der Komponente (b₁) sowie die Herstellung dieser Polymere sind bekannt, z.B. von A. Renner: Makromolekulare Chemie 149, 1-27 (1971).

Die bevorzugten Verbindungen der Komponente (b₁) werden durch Reaktion von Formaldehyd mit Harnstoff in wässriger Lösung in den oben beschriebenen Verhältnissen hergestellt. Die Reaktion wird vorzugsweise in zwei Stufen durchgeführt. Im ersten Reaktionsschritt wird Harnstoff mit Formaldehyd nach einem gängigen Kondensationsmechanismus umgesetzt, wobei ein niedermolekulares, wasserlösliches Vorkondensat entsteht. Im zweiten Reaktionsschritt kann zur Reaktionsbeschleunigung und Vernetzung ein saurer Katalysator eingesetzt werden, wobei ein unlöslicher, feinverteilter Feststoff entsteht.

Der Wassergehalt in der Reaktionslösung sollte niemals niedriger sein als das Gesamtgewicht der im Reaktionsgemisch vorhandenen Reaktanten und sollte während der Ausfällung der unlöslichen Polymerpartikel höher sein als das Gesamtgewicht aller anderen Komponenten im Reaktionsgemisch .

Die Reaktionstemperatur im ersten Reaktionsschritt liegt gewöhnlich im Bereich von 20 bis 100, vorzugsweise 40 bis 85, und ganz besonders von 60 bis 80°C. Der pH-Wert kann auf einen Wert von 6 bis 9, vorzugweise von 6,5 bis 7,7 durch Zugabe einer starken, wässrigen anorganischen Base, wie z.B. NaOH-Lösung, eingestellt werden.

Vorteilhafterweise kann die Herstellung des Vorkondensats in Anwesenheit eines Tensids, wie z.B. einer kationischen, quaternären Ammoniumbase, eines anionischen Fettalkoholsulfonats, eines nichtionogenen Polyethylenglykolethers, vorzugsweise eines Salzes eines Sulfobernsteinsäureesters, insbesondere Natriumdodecylbenzolsulfonat, durchgeführt werden. Das Tensid wird z.B. in Mengen von 0,5 bis 5 Gew.-%, bezogen auf das Gesamtgewicht des Harnstoffs und Formaldehyds, eingesetzt. Ionische Tenside bewirken einen Anstieg der spezifischen Oberfläche des Harnstoff-Formaldehyd-Polymerproduktes, während nichtionogene Tenside die gegenteilige Wirkung erzielen.

Vorteilhafterweise wird der erste Reaktionsschritt in Anwesenheit eines makromolekularen, wasserlöslichen Schutzkolloides mit polyelektrolytischen Eigenschaften durchgeführt. Beispiele für solche Schutzkolloide sind Gelatine, Tragacanth, Agar und Polyvinylpyrrolidon, insbesondere Homo- oder Copolymerisate von Acryl- und Methacrylsäure, insbesondere Methacrylsäure. Die Einsatzmenge des Schutzkolloids kann in einem Bereich von z.B. 0,5 bis 5 Gew.-%, bezogen auf das Gesamtgewicht des Harnstoffs und Formaldehyds, liegen. Weder Polyvinylpyrrolidon noch Polymethacyrlysäure bewirken einen Anstieg der spezifischen Oberfläche des wasserunlöslichen Harnstoff-Formaldehydharzes der Komponente (b₁).

Eine der wichtigsten Bedingungen für die erfolgreiche Herstellung von unschmelzbaren, unlöslichen und feinverteilten Harnstoff-Formaldehyd-Polymeren, die den qualitativen Ansprüchen der erfindungsgemässen Streichformulierung genügen, ist die Verwendung eines geeigneten Gelkatalysators im zweiten Reaktionsschritt. Als geeignete Katalysatoren kommen z.B. relativ starke anorganische und/oder organische Säuren wie z.B. Schwefelsäure, schwefelige Säure, Sulfaminsäure, Phosphorsäure, Salzsäure, Chloressigsäure, Maleinsäure oder Maleinsäureanhydrid in Betracht. Im allgemeinen sollten diese Gelkatalysatoren eine Ionisationskonstante von mehr als 10⁻⁴ aufweisen. Schwefelsäure und ihre sauren Ammonium- oder Aminsalze sowie Ammonium-, Methylamin- oder Ethanolaminhydrogensulfat werden bevorzugt. Die Säuren werden im allgemeinen als 1 bis 15 Gew.-%ige wässrige Lösungen eingesetzt. Als Faustregel werden 20 bis 100 Mmol eines vernetzenden Katalysators pro Mol hinzugefügter Harnstoff verwendet. Dies bewirkt eine Erniedrigung des pH-Wertes des Reaktionsgemisches auf 1 bis 3,0 im zweiten Reaktionsschritt während der Polymerbildung.

Wenn Sulfaminsäure verwendet wird, werden im allgemeinen wasserunlösliche Harnstoff-Formaldehydharze mit relativ hoher spezifischer Oberfläche erhalten, wobei die anderen, oben erwähnten Säuren, insbesondere Schwefelsäure und ihre Ammonium- oder Aminsalze den gegenteiligen Effekt ausüben.

Die Reaktionstemperaturen im zweiten, harzbildenden Reaktionsschritt reichen in der Regel von 20 bis 100, vorzugsweise 40 bis 85, und insbesondere von 40 bis 65°C. Grosse Temperaturunterschiede im Reaktionsgemisch sollten während der Zugabe des Katalysators vermieden werden. Es ist daher wünschenswert, vor der Zugabe der wässrigen Katalysator-Lösung diesen auf die Temperatur des Reaktionsgemisches zu erwärmen. Im allgemeinen wird nach nur 15 bis 30 Sekunden ein weisses Gel erhalten. Die Vernetzungsreaktion ist gewöhnlich nach einer Reaktionszeit von 30 Minuten bis 3 Stunden abgeschlossen.

Das unlösliche Polymer fällt als weisses Gel an und kann mechanisch zerkleinert, mit einem etwa gleichen Betrag an Wasser behandelt, mit Alkali oder Ammoniak, insbesondere Natriumhydroxid-Lösung, auf einen pH-Wert von 6 bis 9, vorzugsweise 6,5 eingestellt und anschliessend z.B. durch Filtration, Zentrifugieren oder Eindampfen von der wässrigen Phase getrennt werden. Die Trocknung kann z.B. durch Spray-Trocknung oder Konvektions-Trocknung erfolgen. Obwohl das Endprodukt in der Regel feine Partikel enthält, ist es trotzdem wünschenswert, das Festprodukt zur Herabsetzung der mittleren Agglomerationsgrösse und zur Vergrösserung des Absorptionswertes, einer Zerkleinerung oder Deagglomeration zu unterwerfen.

Als wasserlösliche optische Aufheller entsprechend der Komponente (b₂) können z.B. eine Triazinyl-diaminostilbendisulfonsäure; ein Aminocumarin wie z.B. 7-Diethylamino-4-methylcumarin; ein Carbostyrol wie z.B. 1-Ethyl-3-phenyl-7-diethylamino-carbostyrol; ein Pyrazolin wie z.B. p-[3-p-chlorophenyl)-2-pyrazolin-1-yl]-benzolsulfonamid; ein Stilben-Naphtotriazol; ein Stilben-oxotriazol wie z.B. 4-4'-bis-[1,2,3-triazolyl-(2)-stilben-2,2'-disulfonsäure]-di-kaliumsalz; ein Distyrylbenzol wie z.B. 1,4-bis-[2-{2-(N-ethyl-N-carboxylatomethyl-ammonio)-ethoxy}styryl]benzol; oder ein Benzoxazol wie z.B. 2,5-Bis(benzoxazol-2-yl)thiophen; oder die Verbindung der Formel 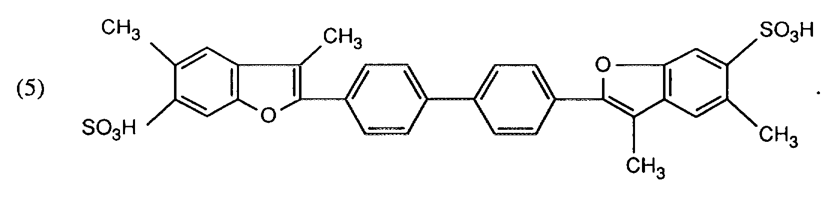 verwendet werden.

Bevorzugte wasserlösliche optische Aufheller entsprechen der Formel 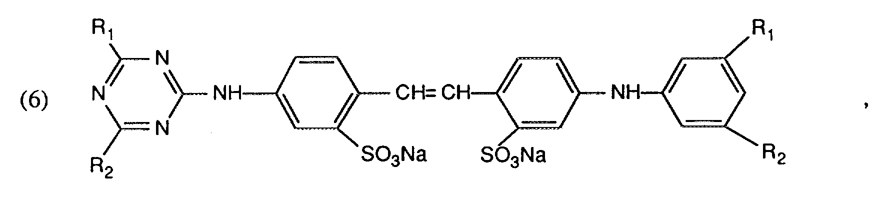 worin
R₁ einen Anilin-, Anilin-3-sulfonsäure-, Anilin-4-sulfonsäure- oder Diethanolamino- Rest und
R₂ Amino, Methoxy, Methylamino, Ethylamino, Ethanolamino, Diethanolamino, N-Methylethanolamino, Ethanolaminopropionamido, einen Anilin-, Anilin-4-sulfonsäure- oder Morpholino- Rest
bedeuten.

Andere bevorzugte wasserlösliche optische Aufheller entsprechen der Formel 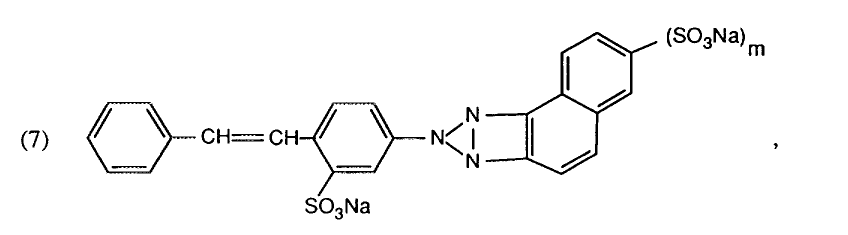 worin
m 0 oder 1 bedeutet, oder der Formel 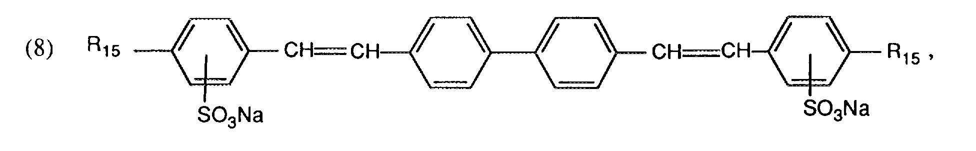 worin
R₁₅ Wasserstoff oder Chlor
bedeutet.

Ganz besonders bevorzugte optische Aufheller entsprechen der Formel 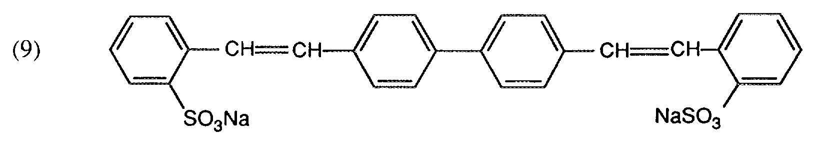 oder der Formel

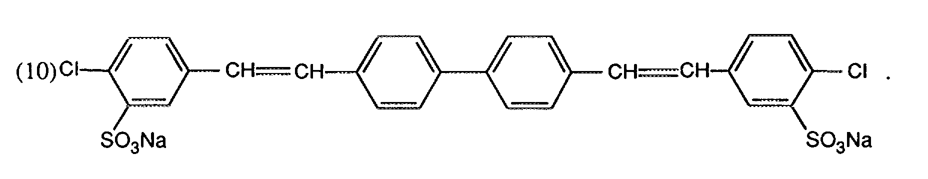

Die Komponente (b) kann durch Mischen der Komponenten (b₁) und (b₂), vorzugsweise in Anwesenheit eines Lösungsmittels, insbesondere Wasser, hergestellt werden. Nach dem Mischen kann das Lösungsmittel gewünschtenfalls entfernt werden.

Die Komponente (b) findet insbesondere Verwendung als Weisspigment in thermoreaktiven Papiersystemen. Sie kann grundsätzlich alleine oder auch mit anderen Pigmenten in der erfindungsgemässen Streichformulierung verwendet werden. Als weitere Pigmente können z.B. Talk, Titandioxid, Aluminiumoxid, Aluminiumhydroxid, Zinkoxid, Kreide oder Tone wie z.B. Kaolin verwendet werden.

Die erfindungsgemässe Streichformulierung enthält als Komponente (c) einen vorzugsweise sauren Entwickler, d.h. einem Elektronenakzeptor. Es können z.B. sauer reagierende, organische Verbindungen, wie z.B. gegebenenfalls ringsubstituierte Phenole, Resorcine, Salicylsäuren, wie z.B. 3,5-Bis-(α,α-dimethylbenzyl)-salicylsäure oder 3,5-Bis-(α-methylbenzyl)-salicylsäure oder Salicylsäureester und deren Metallsalze, z.B. Zinksalze, sowie ein sauer reagierendes, polymeres Material, wie z.B. ein phenolisches Polymerisat, ein Alkylphenolacetylenharz, ein Maleinsäure-Kolophonium-Harz oder ein teilweise oder vollständig hydrolysiertes Polymerisat von Maleinsäureanhydrid mit Styrol, Ethylen oder Vinylmethylether, oder Carboxymethylen verwendet werden. Es können auch Mischungen der genannten monomeren und polymeren Verbindungen eingesetzt werden. Besonders bevorzugte Entwickler sind Phenolharze oder auch phenolische Verbindungen, wie sie beispielsweise in der DE-PS-1,251,348 beschrieben sind, z.B. 4-tert.-Butylphenol, 4-Phenylphenol, Methylen-bis-(p-phenylphenol), 4-Hydroxydiphenylether, α-Naphthol, β-Naphthol, 4-Hydroxybenzoesäuremethyl- oder -benzylester, 4-Hydroxydiphenylsulfon, 4'-Hydroxy-4-methyldiphenylsulfon, 4'-Hydroxy-4-isopropoxydiphenylsulfon, 4,4'-Cyclo-hexylidendiphenol, 4,4'-Isopropylidendiphenol, 4,4'-Isopropyliden-bis-(2-methylphenol), ein Antipyrinkomplex von Zinkthiocyanat, ein Pyridinkomplex von Zinkthiocyanat, 4,4-Bis-(4-hydroxyphenyl)valeriansäure, Hydrochinon, Pyrogallol, Phloroglucin, o-, m-, p-Hydroxybenzoesäure, Hydroxyphthalsäure, Gallussäure, 1-Hydroxy-2-naphthoesäure sowie Borsäure oder organische, vorzugsweise aliphatische Dicarbonsäuren, wie z.B. Weinsäure, Oxalsäure, Maleinsäure, Zitronensäure, Citraconsäure oder Bernsteinsäure.

Als Aktivatoren entsprechend der fakultativen Komponente (d) kommen z.B. Dimethylterephthalat, Benzyl-Benzyloxy-Benzoat, Terephthalsäuredibenzylester, Phenyl-1-Oxy-2-naphthoat, 2,6-Di-tert.Butyl-p-kresol, Salicylsäurephenylester, Benzophenon, N-Phenylbenzolsulfonamid, Phenyl-1-hydroxy-2-naphthoat, 4'4-Dibutoxydiphenylsulfon oder vorzugsweise p-Benzyl-biphenyl, in Betracht. Die Aktivatoren dienen in erster Linie zur Schmelzpunkterniedrigung der Streichformulierung.

Bevorzugt werden Streichformulierungen verwendet, die
(a) einen Farbbildner der Komponente (a₁) oder ein Gemisch aus dem Farbbildner der Komponente (a₁) und dem Farbbildner der Komponente (a₄),
(b) eine Mischung aus
   (b₁) einem wasserunlöslichen Harnstoff-Formaldehydharz mit einem Molverhältnis von Harnstoff zu Formaldehyd von 1:1,3 bis 2 Mol und einem Teilchendurchmesser von 2 bis 10 µ und einer spezifische BET-Oberfläche von 15 bis 60 m/g, und
   (b₂) einem optischen Aufheller der Formel (4),
(c) einer phenolischen Verbindung und
(d) p-Benzyl-biphenyl
enthalten.

Bevorzugte erfindungsgemässe Streichformulierungen enthalten, bezogen auf das Gesamtgewicht,
(a) 5 bis 20 Gew.% der Komponente (a),
(b) 10 bis 40 Gew.% einer Mischung aus
   (b₁) eines hochdispersen, festen, wasserunlöslichen, organischen Polymers und
   (b₂) 0,01 bis 10 Gew.%, bezogen auf das Gewicht des wasserunlöslichen Polymers, eines wasserlöslichen optischen Aufhellers;
(c) 15 bis 40 Gew.% eines Koreaktanten; und
(d) 0 bis 30 Gew.% eines Aktivators.

Die erfindungsgemässe Streichformulierung kann insbesondere in einem thermoreaktiven Aufzeichnungsmaterial verwendet werden. Das thermoreaktive Aufzeichnungsmaterial enthält neben der erfindungsgemässen Streichformulierung in der Regel mindestens einen Schichtträger, und gegebenenfalls auch ein Bindemittel und/oder Wachs.

Thermoreaktive Aufzeichnungssysteme umfassen, z.B. wärmeempfindliche Aufzeichnungs- und Kopiermaterialien und -papiere. Diese Systeme werden beispielsweise zum Aufzeichnen von Informationen, z.B. in elektronischen Rechnern, Ferndruckern, Fernschreibern oder in Aufzeichnungsgeräten und Messinstrumenten, wie z.B. Elektrocardiographen, verwendet Die Bilderzeugung (Markierung) kann auch manuell mit einer erhitzten Feder erfolgen. Eine weitere Einrichtung zur Erzeugung von Markierungen mittels Wärme sind Laserstrahlen.

Das thermoreaktive Aufzeichnungsmaterial kann so aufgebaut sein, dass der Farbbildner, bzw. das Farbbildnergemisch in einer Bindemittelschicht gelöst oder dispergiert ist und in einer zweiten Schicht der Entwickler in dem Bindemittel gelöst und dispergiert ist. Eine andere Möglichkeit besteht darin, dass sowohl der Farbbildner, bzw. das Farbbildnergemisch als auch der Entwickler in einer Schicht dispergiert sind. Die Schicht bzw. Schichten werden in spezifischen Bezirken mittels Wärme erweicht. Auf diese Weise wird ein Kontakt zwischen Farbbildner und Koreaktant hergestellt, worauf sich sofort in den erwärmten Teilen die erwünschte Farbe entwickelt.

Zur Herstellung des thermoreaktiven Aufzeichnungsmaterials werden auch schmelzbare, filmbildende Bindemittel verwendet. Diese Bindemittel sind normalerweise wasserlöslich, während die Farbbildner und der Entwickler in Wasser schwer löslich oder unlöslich sind. Das Bindemittel sollte in der Lage sein, den Farbbildner und den Entwickler bei Raumtemperatur zu dispergieren und zu fixieren.

Wenn das Farbbildnergemisch und der Entwickler in zwei getrennten Schichten vorliegen, können in Wasser unlösliche Bindemittel, d.h. in nichtpolaren oder nur schwach polaren Lösungsmitteln lösliche Bindemittel, wie z.B. Naturkautschuk, synthetischer Kautschuk, chlorierter Kautschuk, Alkydharze, Polystyrol, Styrol/Butadien-Mischpolymerisate, Polymethylacrylate, Ethylcellulose, Nitrocellulose und Polyvinylcarbazol verwendet werden. Die bevorzugte Anordnung ist jedoch diejenige, bei der das Farbbildnergemisch und der Entwickler in einer Schicht in einem wasserlöslichen Bindemittel enthalten sind.

Um die Stabilität des wärmeempfindlichen Aufzeichnungsmaterials oder die Bilddichte des entwickelten Bildes zu gewährleisten, kann das Material mit einer zusätzlichen Schutzschicht versehen sein. Derartige Schutzschichten bestehen in der Regel aus wasserlöslichen und/oder wasserunlöslichen Harzen, die herkömmliche Polymermaterialien oder wässrige Emulsionen von diesen Polymermaterialien sind.

Die thermoreaktiven Schichten und Harzschichten können weitere Zusätze enthalten. Um die Farbbildung nur innerhalb eines begrenzten Temperaturbereiches zu bewirken, können Substanzen wie Harnstoff, Thioharnstoff, Diphenylthioharnstoff, Acetamid, Acetanilid, Benzolsulfanilid, Stearinsäureamid, Bis-stearoylethylendiamid, Phthalsäureanhydrid, Metallstearate, wie z.B. Zinkstearat, Phthalsäurenitril, Dimethylterephthalat, Dibenzyltherephthalat oder andere entsprechende, schmelzbare Produkte, welche das gleichzeitige Schmelzen des Farbbildnergemischs und des Entwicklers induzieren, zugesetzt werden. Bevorzugt enthalten thermographische Aufzeichnungsmaterialien Wachse, z.B. Carnaubawachs, Montanwachs, Paraffinwachs, Polyethylenwachs, Kondensate höherer Fettsäureamide und Formaldehyde und Kondensate höherer Fettsäuren und Ethylendiamin.

Erfindungsgemässe wärmeempfindliche Aufzeichnungssysteme, die mit der erfindungsgemässen Streichformulierung hergestellt sind, zeichnen sich durch hervorragende Papierweisse (Hintergrund) aus.

In den folgenden Herstellungs- und Anwendungsbeispielen beziehen sich die Prozentsätze, wenn nicht anders angegeben, auf das Gewicht.

### Beispiel 1: Herstellung eines thermoreaktiven Papiers

Die Streichflotte wird folgendermassen hergetellt:

### Herstellung der Pigmentdispersion (a):

58,14 g einer Mischung aus 99,8 Gew.-%, bezogen auf das Gesamtgewicht dieser Mischung, einem handlesüblichen Harnstoff/Formaldehyd-Kondensationsproduktes (Pergopak® M2) und 0,2 %eines optischen Aufhellers der Formel 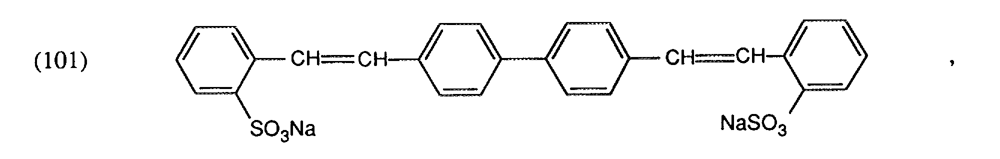
2,19 g Naphthalindisulfonsäure-Formaldehydaddukt als Dispergator und 439,67 g Wassser
werden gemischt und mittels Nassmahlung auf eine durchschnittliche Teilchengrösse von 2 µ gemahlen.

### Herstellung der Koreaktantdispersion (b):

200 g Bisphenol A,
200 g Kartoffelstärke, z.B. ®Sorbex 222,
6 g Naphthalindisulfonsäure-Formaldehydaddukt als Dispergator und
194 g Wasser
werden gemischt und mittels Nassmahlung auf eine durchschnittliche Teilchengrösse von 1,45 µ gemahlen.

### Herstellung der Aktivatordispersion (c):

100 g Benzyldiphenyl,
100 g Kartoffelstärke, z.B. ®Sorbex 222,
4 g Naphthalindisulfonsäure-Formaldehydaddukt als Dispergator und
196 g Wasser
werden gemischt und mittels Nassmahlung auf eine durchschnitliche Teilchengrösse von 1,83 µ gemahlen.

### Herstellung der Stärkedispersion (d):

180 g Wasser und
20 g Kartoffelstärke, z.B. ®Sorbex 222,
werden germischt und gerührt, bis eine klare Lösung vorliegt.

### Herstellung der Farbbildnerdispersion (e):

140 g des Farbbildners der Formel 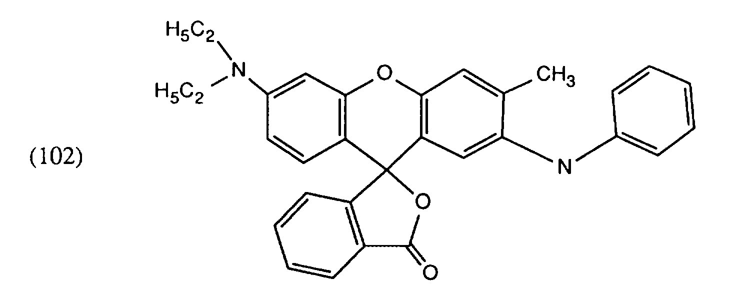
35 g einer 50%igen, wässrigen Lösung des sulfonierten Monoesters einer C₁₂-C₂₂-Fettsäure und
140 g Wasser
   werden gemischt und mittels Nassmahlung auf eine durchschnitliche Teilchengrösse von 1,05 µ gemahlen. Anschliessend werden unter Rühren 35 g einer 10%igen wässrigen Polyvinylalkohol-Lösung
zugemischt.

100 g der Pigmentdispersion (a),
45 g der Koreaktantdispersion (b),
48 g der Aktivatordispersion (c),
15 g der Farbbildnerdispersion (d) und
2 g einer Latexdispersion
werden gemischt.

14,03 g dieser Mischung werden mit
1 g der Farbbildnerdispersion (e) und
7,52 g Wasser gemischt.

Man erhält 22,55 g Streichflotte, die mitztels eines Laborstreichgerätes mit einem Rakel 2 auf ein Streichrohpapier aufgetragen werden. Es wird eine thermoreaktive Schicht von 3 g/m (luftgetrocknet) erzeugt.

### Beispiel 2: Herstellung eines thermoreaktiven Papiers

Man verfährt wie in Beispiel 1 beschrieben, mit dem Unterschied, dass man in der Farbbildnerdispersion (d) anstelle von 140 g des Farbbildners der Formel (102) 140 g des Farbbildners der Formel 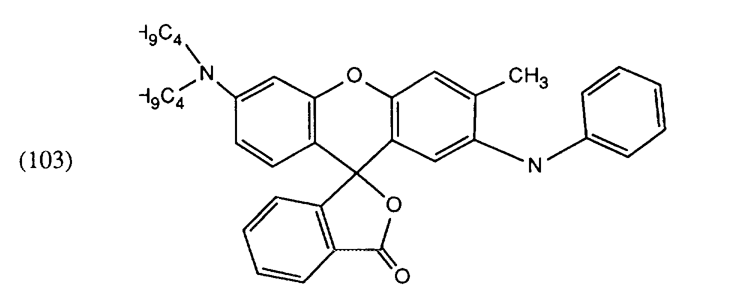 verwendet.

### Beispiel 3: Herstellung eines thermoreaktiven Papiers

Man verfährt wie in Beispiel 1 beschrieben, mit dem Unterschied dass man in der Farbbildnerdispersion (d) anstelle von 140 g des Farbbildners der Formel (102)
140 g einer Farbbildnermischung aus
93,3 g der Verbindung der Formel 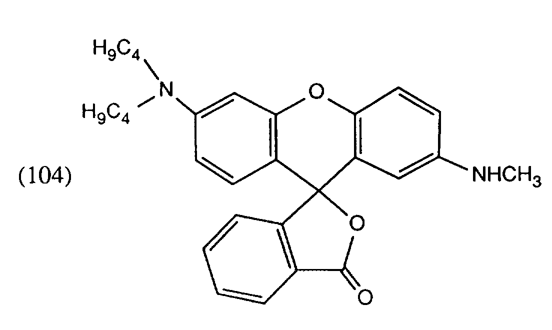 und
46,7 g der Verbindung der Formel 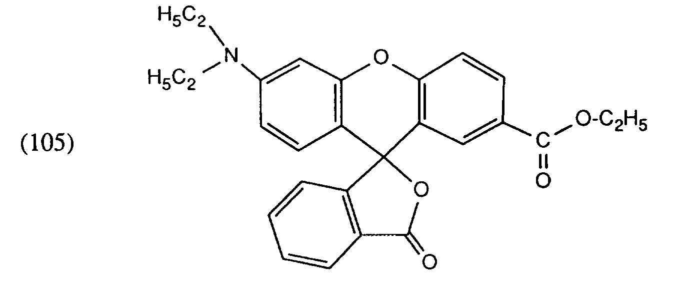 verwendet.

### Beispiel 4: Herstellung eines thermoreaktiven Papiers

Man verfährt wie in Beispiel 1 beschrieben, mit dem Unterschied, dass man in der Farbbildnerdispersion (d) anstelle von 140 g des Farbbildners der Formel (102) 140 g des Farbbildners der Formel 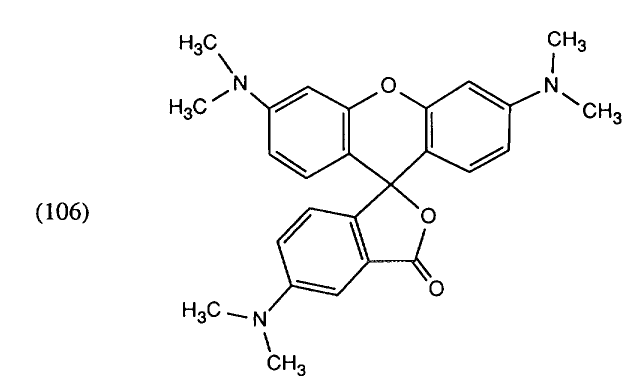 verwendet.

## Patentansprüche

1. Streichformulierung für thermoreaktive Aufzeichnungssysteme, enthaltend
(a) als Farbbildner
(a₁) eine Fluoranverbindung der Formel 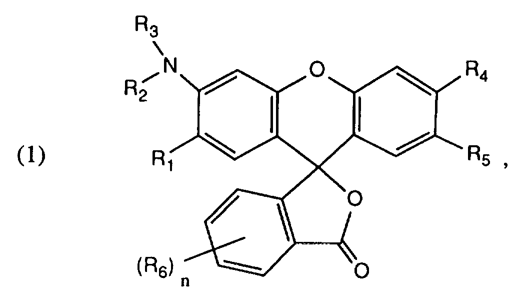 und/oder
(a₂) eine Phthalidverbindung der Formel 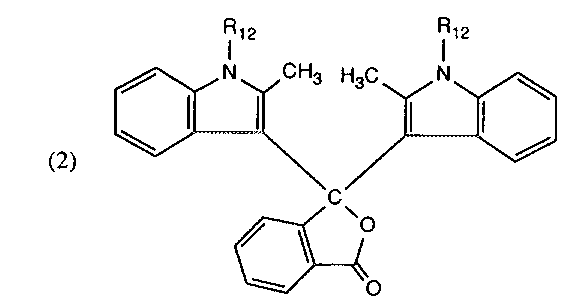 und/oder
(a₃) eine Verbindung der Formel 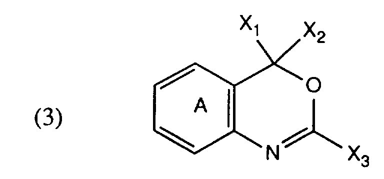 und/oder
(a₄) eine Fluoranverbindung der Formel 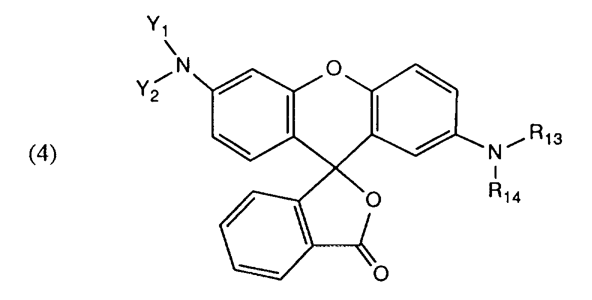
worin
R₁ Wasserstoff oder C₁-C₄-Alkyl;
R₂ und R₃, unabhängig voneinander, Wasserstoff; C₁-C₈-Alkyl; nicht substituiertes oder durch C₁-C₄-Alkyl oder Halogen substituiertes C₄-C₇-Cycloalkyl; nicht substituiertes oder durch C₁-C₄-Alkyl, Hydroxy oder Halogen substituiertes Phenyl; Phenyl-C₁-C₄-Alkyl; C₃-C₆-Alkenyl; C₁-C₄-Alkoxy; C₁-C₄-Alkoxy-C₁-C₄Alkyl; 2-Tetrahydrofuranyl, oder
R₂ und R₃ gemeinsam mit dem Stickstoffatom, an welches sie gebunden sind, einen unsubstituierten oder durch C₁-C₄-Alkyl substituierten Pyrrolidin-, Piperidin-, Morpholin-, Thiomorpholin- oder Piperazin-Ring;
R₄ Wasserstoff, Hydroxy; C₁-C₄-Alkyl; Amino; mono-C₁-C₄-Alkylamino; oder di-C₁-C₄-Alkylamino;
R₅ Nitro; SO₂R₇; SO₂OR₈; SO₂NR₉R₁₀; COR₁₁; CONR₉R₁₀; C₁-C₄-Halogenalkyl; nicht substituierter oder durch Halogen, C₁-C₄-Alkyl, C₁-C₄-Halogenalkyl oder C₁-C₄-Alkoxy substituiertes C₆-C₁₀-Aryl; unsubstituiertes oder im Phenylrest durch C₁-C₄-Alkyl; C₁-C₄-Halogenalkyl oder C₁-C₄-Alkoxy substituiertes Phenyl; Phenylamino; oder Phenyl-C₁-C₄-Alkylamino; nicht substituierter oder durch Halogen oder Hydroxy substituierter 2-Triazinyl- oder 1-Benztriazolylrest;
R₆ Halogen; Nitro; C₁-C₄-Alkyl; C₁-C₄-Halogenalkyl; Amino; mono-C₁-C₄-Alkylamino; di-C₁-C₄-Alkylamino; oder COR₁₁;
n 0; 1; 2; 3; oder 4;
R₇ C₁-C₈-Alkyl; oder C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl oder Phenyl-C₁-C₄-Alkyl;
R₈ Wasserstoff; C₁-C₈-Alkyl; C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl oder Phenyl-C₁ -C₄-alkyl;
R₉ und R₁₀ unabhängig voneinander Wasserstoff; oder C₁-C₈-Alkyl; oder
R₉ und R₁₀ gemeinsam mit dem Stickstoffatom, an welches sie gebunden sind, einen unsubstituierten oder durch C₁-C₄-Alkyl substituierten Pyrrolidin-, Piperidin-, Morpholin-, Thiomorpholin- oder Piperazin-Ring; und
R₁₁ Wasserstoff; Hydroxy; C₁-C₈-Alkyl; C₁-C₈-Alkoxy; C₁-C₈-Halogenalkyl; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₄-Alkyl oder Phenyl-C₁-C₄-Alkoxy;
R₁₂ und R₁₃, unabhängig voneinander, C₁-C₈-Alkyl oder 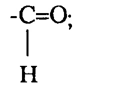
R₁₄ Wasserstoff oder C₁-C₅-Alkyl;
X₁ und X₂, unabhängig voneinander, unsubstituiertes oder im Phenylrest durch Halogen, Nitro, C₁-C₄-Alkyl, C₁-C₄-Alkoxy, C₁-C₄-Halogenalkyl oder -NR₁₂R₁₃ substituiertes Phenyl oder Phenyl-C₁-C₄-Alkyl; einen 2-Pyrrolyl-, 2-Thienyl-, 2- oder 3-Indolyl-, 2-Benzofuranyl- oder 2-Naphthothienylrest;
X₃ Wasserstoff; C₁-C₅-Alkyl; C₅-C₇-Cycloalkyl, unsubstituiertes oder im Phenylrest durch Halogen, C₁-C₄-Alkyl, C₁-C₄-Halogenalkyl oder C₁-C₄-Alkoxy substituiertes Phenyl;
Y₁ und Y₂, unabhängig voneinander, C₁-C₅-Alkyl;
der Benzolring A durch Halogen; Cyano; Nitro; C₁-C₅-Alkyl; C₁-C₅-Alkoxy;
C₁-C₅-Alkylthio; C₁-C₅-Alkylcarbonyl; C₁-C₅-Alkoxycarbonyl; oder NR₂R₃ substituiert sein kann;
bedeutet,
(b) eine Mischung aus
(b₁) eines hochdispersen, festen, wasserunlöslichen organischen Polymers und
(b₂) 0,01 bis 10 Gew.%, bezogen auf das Gewicht des wasserunlöslichen Polymers, eines wasserlöslichen optischen Aufhellers;
(c) einen Koreaktanten; und gegebenenfalls
(d) einen Aktivator.

2. Streichformulierung nach Anspuch 1, enthaltend als Komponente (a₁) eine Fluoranverbindung der Formel (1), worin
R₁ Wasserstoff oder Methyl;
R₂ und R₃ unabhängig voneinander Wasserstoff; C₁-C₅-Alkyl; oder
R₂ und R₃ gemeinsam mit dem Stickstoffatom, an welches sie gebunden sind, einen unsubstituierten Pyrrolidin- oder Piperidin-Ring;
R₄ Wasserstoff, Hydroxy; C₁-C₄-Alkyl; Amino; mono-C₁-C₄-Alkylamino; oder di-C₁-C₄-Alkylamino;
R₅ Nitro; SO₂R₇; SO₂NR₉R₁₀; COR₁₁; CONR₉R₁₀; C₁-C₄-Halogenalkyl; unsubstituiertes oder im Phenylrest durch Halogen, C₁-C₄-Alkyl; C₁-C₄-Halogenalkyl oder C₁-C₄-Alkoxy substituiertes Phenyl; Phenyl-C₁-C₄-Alkyl; Phenylamino; oder Phenyl-C₁-C₄-Alkylamino;
n 0; 1; 2; 3; oder 4;
R₆ wenn n 1, 2, 3 oder 4 ist; Halogen; wenn n 1 oder 2 ist Methyl; oder wenn n 1 ist, Nitro, Amino, mono-C₁-C₄-Alkylamino oder di-C₁-C₄-Alkylamino;
R₇ C₁-C₄-Alkyl; oder C₁-C₄-Halogenalkyl; unsubstituiertes oder im Phenylrest durch Halogen, C₁-C₄-Alkyl oder C₁-C₄-Alkoxy substituiertes Phenyl;
R₉ und R₁₀ unabhängig voneinander Wasserstoff; oder C₁-C₄-Alkyl;
R₁₁ Wasserstoff; C₁-C₄-Alkyl; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
bedeuten.

3. Streichformulierung nach Anspuch 1 oder 2, enthaltend als Komponente (a₁) ein Farbbildner der Formel (1), worin
R₅ COR₁₁ und
R₁₁ Wasserstoff; C₁-C₄-Alkyl; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
bedeuten.

4. Streichformulierung nach einem der Ansprüche 1 bis 3, dadurch gekennzeichnet, dass als Komponente (a₁) ein Farbbildner der Formel (1) verwendet wird, worin
R₅ Phenyl; Phenylamino; oder Phenyl-C₁-C₄-Alkylamino bedeutet.

5. Streichformulierung nach einem der Ansprüche 1 bis 4, enthaltend als Komponente (a₄) eine Verbindung der Formel (4), worin
Y₁ und Y₂ unabhängig voneinander C₃-C₅-Alkyl und
R₁₃ C₁-C₅-Alkyl oder 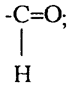 und
R₁₄ Wasserstoff oder C₁-C₅-Alkyl;
bedeuten.

6. Streichformulierung nach Anspruch 5, enthaltend als Komponente (a₄) eine Verbindung der Formel (4), worin
Y₁ und Y₂, unabhängig voneinander, C₄-C₅-Alkyl bedeuten.

7. Streichformulierung nach Anspruch 4 oder 5, dadurch gekennzeichnet, dass Y₁ und Y₂ die gleiche Bedeutung haben.

8. Streichformulierung nach Anspruch 1, enthaltend als Komponente (a₁) eine Verbindung der Formel (1), worin
R₁ Wasserstoff oder Methyl;
R₄ Wasserstoff, Halogen oder Methyl;
R₅ COR₈;
n 0, 1, 2, 3 oder 4;
R₆ wenn n 1,2,3 oder 4 ist, Halogen; wenn n 1 oder 2 ist, Methyl; oder wenn n 1 ist, Nitro, Amino, mono-C₁-C₄-Alkylamino oder di-C₁-C₄-Alkylamino;
R₈ Wasserstoff; C₁-C₄-Alkyl; C₁-C₄-Alkoxy; unsubstituiertes oder im Phenylrest durch Halogen, C₁-C₄-Alkyl, C₁-C₄-Halogenalkyl oder C₁-C₄-Alkoxy substituiertes Phenyl; Phenyl-C₁-C₂-Alkyl oder Phenyl-C₁-C₂-Alkoxy;
R₂ und R₃ unabhängig voneinander Wasserstoff; C₁-C₅-Alkyl; oder
R₂ und R₃ gemeinsam mit dem Stickstoffatom, an welches sie gebunden sind, einen unsubstituierten Pyrrolidin- oder Piperidin-Ring;
als Komponente (a₂) eine Verbindung der Formel (2), worin
R₁₂ C₁-C₅-Alkyl bedeuten,
und als Komponente (a₄) eine Verbindung der Formel (4), worin
Y₁ und Y₂ C₃-C₅-Alkyl und
R₁₃ C₁-C₅-Alkyl; oder 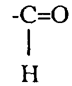 und
R₁₄ Wasserstoff oder C₁-C₅-Alkyl;
bedeuten.

9. Streichformulierung nach Anspruch 1, enthaltend als Farbbildner die Komponente (a₁).

10. Streichformulierung nach Anspuch 1, enthaltend als Farbbildner ein Gemisch aus der Komponente (a₁) und (a₄).

11. Streichformulierung nach einem der Ansprüche 1 bis 10, dadurch gekennzeichnet, dass die Komponente (b₁) ein wasserunlöslicher Harnstoff-Formaldehydharz mit einem Molverhältnis von Harnstoff zu Formaldehyd von 1:1,3 bis 2 Mol ist, und eine Teilchendurchmesser von 2 bis 10 µ und eine spezifische BET-Oberfläche von 15 bis 60 m/g aufweist.

12. Streichformulierung nach einem der Ansprüche 1 bis 10, enthaltend als Komponente (b₂) einen optischer Aufheller, ausgewählt aus der Klasse der Triazinyl-diaminostilbendisulfonsäure, Aminocumarin, Carbostyryl, Pyrazolin, Stilbennapthotriazol, Stilbenoxotriazol, Distyrylbenzol, Distyrylstilben und Benzoxazol.

13. Streichformulierung nach Anspruch 12, enthaltend als optischen Aufheller 7-Diethylamino-4-methylcumarin, 1-Ethyl-3-phenyl-7-diethylamino-carbostyrol, p-[3-p-chlorophenyl)-2-pyrazolin-1-yl]-benzolsulfonamid, 4-4'-bis-[1,2,3-triazolyl-(2)-stilben-2,2'-disulfonsäure-di-kaliumsalz,
1,4-bis-[2-(2-(N-ethyl-N-carboxylatomethyl-ammonio)-ethoxy}styryl]benzol;
2,5-bis(benzoxazol-2-yl)thiophen; oder die Verbindung der Formel

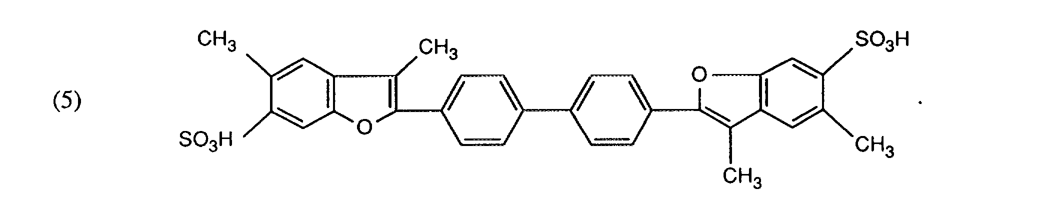

14. Streichformulierung nach Anspruch 12, enthaltend als optischen Aufheller die Verbindung der Formel 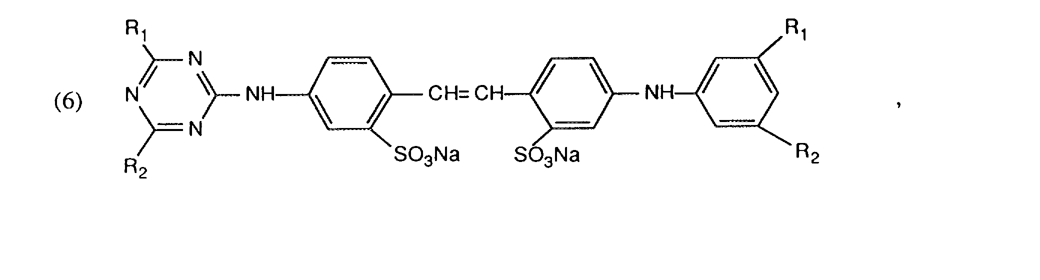 worin
R₁ einen Anilin-, Anilin-3-sulfonsäure-, Anilin-4-sulfonsäure- oder Diethanolamino-Rest und
R₂ Amino, Methoxy, Methylamino, Ethylamino, Ethanolamino, Diethanolamino, N-Methylethanolamino, Ethanolaminopropionamido, einen Anilin-, Anilin-4-sulfonsäure- oder Morpholino-Rest
bedeuten.

15. Streichformulierung nach Anspruch 12, enthaltend als optischen Aufheller eine Verbindung der Formel 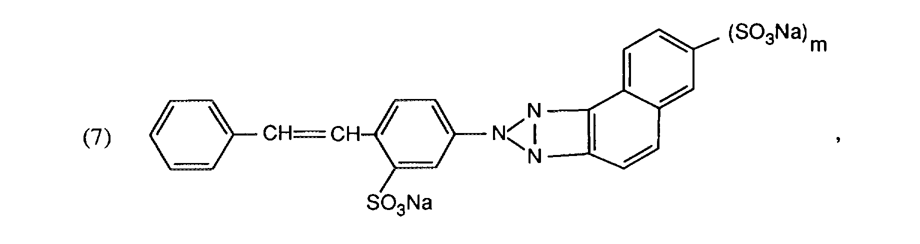 worin
m 0 oder 1 bedeutet.

16. Streichformulierung nach Anspruch 10, enthaltend als optischen Aufheller eine Verbindung der Formel 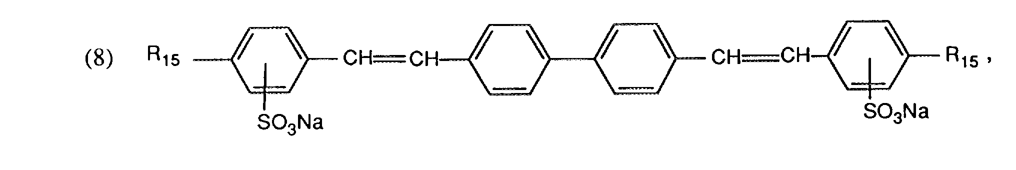 worin
R₁₅ Wasserstoff oder Chlor
bedeutet.

17. Streichformulierung nach Anspruch 16, enthaltend als optischen Aufheller eine Verbindung der Formel

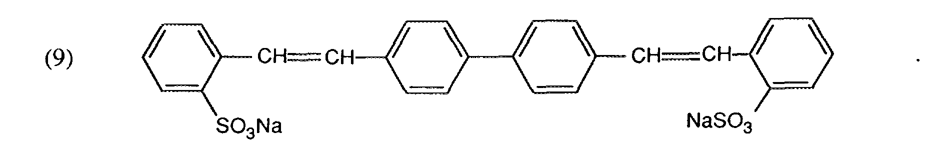

18. Streichformulierung nach Anspruch 16, enthaltend als optischen Aufheller eine Verbindung der Formel

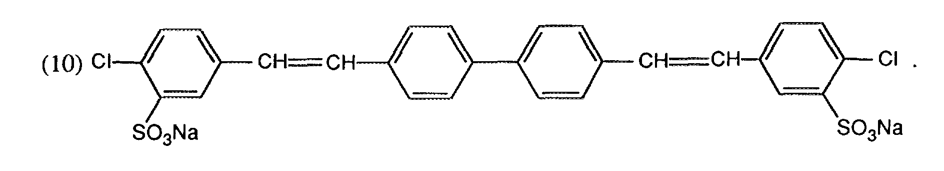

19. Streichformulierung nach einem der Ansprüche 1 bis 18, enthaltend als Komponente (c) Phenolharze oder phenolische Verbindungen.

20. Streichformulierung nach einem der Ansprüche 1 bis 19, enthaltend als Komponente (d) Dimethylterephthalat, Benzyl-Benzyloxy-Benzoat, Terephthalsäuredibenzylester, Phenyl-1-Oxy-2-naphthoat, p-Benzyl-biphenyl, 2,6-Di-tert.Butyl-p-kresol, Salicylsäurephenylester, Benzophenon, N-Phenylbenzolsulfonamid, Phenyl-1-hydroxy-2-naphthoat oder 4'4-Dibutoxydiphenylsulfon.

21. Streichformulierung nach Anspruch 20, enthaltend als Komponente (d) p-Benzyl-biphenyl.

22. Streichformulierung nach einem der Ansprüche 1 bis 21, enthaltend
(a) einen Farbbildner der Komponente (a₁) oder ein Gemisch aus dem Farbbildner der Komponente (a₁) und dem Farbbildner der Komponente (a₄),
(b) eine Mischung aus
(b₁) einem wasserunlöslichen Harnstoff-Formaldehydharz mit einem Molverhältnis von Harnstoff zu Formaldehyd von 1:1,3 bis 2 Mol und einem Teilchendurchmesser von 2 bis 10 µ und einer spezifische BET-Oberfläche von 15 bis 60 m/g, und
(b₂) einem optischen Aufheller der Formel (4),
(c) einer phenolischen Verbindung und
(d) p-Benzyl-biphenyl.

23. Streichformulierung nach einem der Ansprüche 1 bis 22, enthaltend
(a) 5 bis 20 Gew.% der Komponente (a),
(b) 10 bis 40 Gew.% einer Mischung aus
(b₁) eines hochdispersen, festen, wasserunlöslichen, organischen Polymers und
(b₂) 0,01 bis 10 Gew.%, bezogen auf das Gewicht des wasserunlöslichen Polymers, eines wasserlöslichen optischen Aufhellers;
(c) 15 bis 40 Gew.% eines Koreaktanten; und
(d) 0 bis 30 Gew.% eines Aktivators.

24. Verfahren zur Herstellung eines theromreaktiven Papiers, dadurch gekennzeichnet, dass man auf ein Streichrohpapier mittels eines Laborstreichgerätes eine Streichformulierung gemäss einem der Ansprüche 1 bis 23 aufträgt.

25. Wärmeempfindliches Aufzeichnungsmaterial, enthaltend eine Streichformulierung nach einem der Ansprüche 1 bis 23.

26. Verwendung einer Mischung aus
(b₁) einem hochdispersen, festen, wasserunlöslichen organischen Polymer und
(b₂) 0,01 bis 10 Gew.%, bezogen auf das Gewicht des wasserunlöslichen Polymers, eines wasserlöslichen optischen Aufhellers zur Herstellung eines wärmeempfindlichen Aufzeichnungsmaterials.

27. Verbindungen der Formel 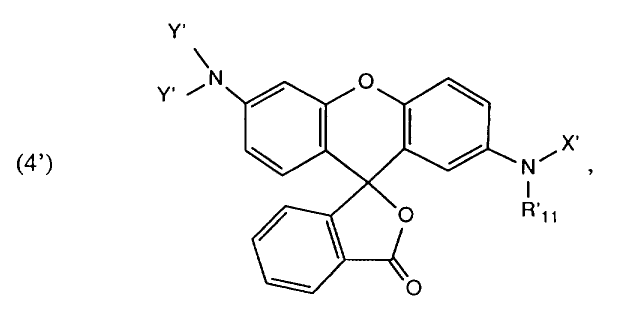 worin
X' C₁-C₅-Alkyl; oder 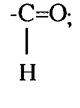
Y' C₄-C₅-Alkyl; und
R'₁₁ Wasserstoff oder C₁-C₅-Alkyl
bedeuten.
